# EUROPEAN PATENT APPLICATION

(11) **EP 1 767 143 A1**
(43) Date of publication of application: **28.03.2007**
(21) Application number: 05743788.1
(22) Date of filing: 25.05.2005
(51) Int. Cl.: A61B 3/10

(54) **PUPIL DETECTION DEVICE AND IRIS VERIFYING DEVICE**

(30) Priority: 14.07.2004 JP 2004206933
(71) Applicant: Matsushita Electric Industrial Co., Ltd., Kadoma-shi, Osaka 571-8501 (JP)
(72) Inventor: SUGITA, Morio Matsushita Electrical Industrial C, Osaka 571-8501 (JP); WAKAMORI, Masahiro Matsushita Electrical Ind. CO, Osaka 571-8501 (JP); FUJIMATSU, Takeshi Matsushita Electrical Ind., Osaka 571-8501 (JP)
(74) Representative: Grünecker, Kinkeldey, Stockmair & Schwanhäusser Anwaltssozietät
(86) International application number: PCT/JP2005/009510
(87) International publication number: WO 2006/006307

(57) **Abstract**

A pupil detection device includes an image data extraction unit (220) for determining a plurality of concentric circles on an eye image respectively as integrating circles and extracting the image data of the eye image positioned on the circumferences of the integrating circles; a pointer unit (260) for indicating center coordinates of the integrating circles; a contour integrating unit (230) for integrating the image data extracted by the image data extraction unit (220) along the respective circumferences of the integrating circles; a pupil radius detection unit (250) for detecting that the integrated value of the integrating circle has changed stepwise with respect to the radius of the integrating circle; a pupil position detection unit (280) for detecting that the center coordinates of the integrating circle as pupil position coordinates when the integrated value of the integrating circle is changed stepwise with respect to the radius of the integrating circle, and the image data extraction unit (220) extracts a plurality of image data simultaneously.

## Description

### [Technical Field]

The present invention relates to an iris authentication apparatus used for personal authentication or the like and, more specifically, to a pupil detection device for detecting the position of a pupil from an eye image (image including an eye).

### [Background Art]

In recent years, various methods for detecting the position of a pupil from an eye image are proposed. For example, a method of binarizing image data of the eye image (hereinafter, abbreviated as "eye image data") and detecting a circular area in an area of low-liminance level is known. A method of calculating a contour integral of an image luminance I (x, y) with respect to an arc of a circle having a radius r and center coordinates (xo, yo), and calculating a partial derivative of this r-related amount in accordance with increase in the radius r is known. The aforementioned structure in the related art is disclosed, for example, in JP-T-8-504979.

In order to detect the pupil with high degree of accuracy using these methods, it is necessary to process a huge amount of image data at high-speed, and hence it is difficult to process the image data of the eye image on real time basis even though a large CPU having a high processing capability or a bulk memory in the status quo. Also, when the processing amount of the CPU is reduced to a degree which enables real time processing of the image data, there may arise a problem such that the detection accuracy is lowered.

### [Disclosure of Invention]

The present invention provides a pupil detection device and an iris authentication apparatus which can detect the position of a pupil at high-speed and with high degree of accuracy.

The pupil detection device of the present invention includes an image data extraction unit, a contour integrating unit, a pupil radius detection unit, and a pupil position detection unit. The image data extraction unit determines a plurality of circles on an eye image as integrating circles respectively, and extracts the eye image data along the integrating circles. A contour integrating unit integrates the image data extracted by the image data extraction unit along the respective circumferences of the integrating circles. A pupil radius detection unit detects that an integrated value obtained by the contour integrating unit has changed stepwise with respect to the radius of the integrating circle. A pupil position detection unit detects that the center coordinates of the integrating circle as pupil position coordinates when the pupil radius detection unit detects the change stepwise. Then, the plurality of circles are set concentrically, and the image data extraction unit extracts the plurality of image data simultaneously.

### [Brief Description of the Drawings]

Fig. 1 is a circuit block diagram of an iris authentication apparatus using a pupil detection device according to an embodiment of the present invention.
Fig. 2 is a flowchart showing an operation of the iris authentication apparatus using the pupil detection device in the embodiment of the present invention.
Fig. 3A is a drawing showing an example of an image including a pupil.
Fig. 3B is a drawing showing an integrated value with respect to a radius of an integrating circle.
Fig. 3C is a drawing showing a value obtained by differentiating the integrated value by the radius of the integrating circle.
Fig. 3D is a drawing showing the integrating circles moving on an eye image.
Fig. 4 is a circuit block diagram of the pupil detection device in the embodiment of the present invention.
Fig. 5 is a circuit drawing of an image data extraction unit in the embodiment of the present invention.
Fig. 6 is a flowchart showing an action corresponding to one frame of the eye image of the pupil detection device according to the embodiment of the present invention.

### [Reference Numerals]

- 100: iris authentication apparatus
- 120: image pickup unit
- 130: illumination unit
- 140: authentication processing unit
- 200: pupil detection device
- 220: image data extraction unit
- 230: contour integrating unit
- 250: pupil radius detection unit
- 260: pointer unit
- 280: pupil position detection unit

### [Best Mode for Carrying Out the Invention]

A pupil detection device of the present invention includes an image data extraction unit, a contour integrating unit, a pupil radius detection unit, and a pupil position detection unit. The image data extraction unit determines a plurality of circles on an eye image as integrating circles respectively, and extracts image data of the eye image positioned on the circumferences of the integrating circles. The contour integrating unit integrates the image data extracted by the image data extraction unit along the respective circumferences of the integrating circles.

The pupil radius detection unit detects that an integrated value obtained by the contour integrating unit has changed stepwise with respect to the radius of the integrating circle. The pupil position detection unit detects the center coordinates of the integrating circle as the pupil position coordinates when the pupil radius detection unit detects the change stepwise. The plurality of circles are set concentrically, and the image data extraction unit extracts a plurality of image data simultaneously. In this arrangement, the pupil position can be detected at high-speed and with high degree of accuracy.

The pupil radius detection unit of the pupil detection device of the present invention is preferably configured in such a manner that when a difference value between the integrated value of the two integrating circles having the closest radius out of the plurality of concentric integrating circles is larger than a predetermined threshold, it is considered that the integrated value has changed stepwise with respect to the radius of the integrating circle. Accordingly, the pupil radius detection unit can be configured with a relatively small-scale circuit.

A predetermined threshold in the pupil detection device of the present invention is preferably set to a range between 1/4 to 1/1 times the difference between the integrated value when the integrating circle is located on an iris and the integrated value when the integrating circle is located on a pupil. Accordingly, the probability value of the accurate detection of the pupil can be increased.

A partial frame memory in the image data extraction unit of the pupil detection device of the present invention is preferably configured in such a manner that a plurality of line memories of first-in first-out (FIFO) type are connected. A configuration in which drawing lines for outputting image data corresponding to pixels on the respective circumferences of the plurality of concentric integrating circles are provided is also preferable. Accordingly, the image data extraction unit can be configured using a relatively small-scale circuit.

The pupil detection device of the present invention preferably includes a pointer unit for pointing the center coordinates of the integrating circles, and the pointer unit includes a counter for counting a clock synchronized with a period for acquiring the image data on the partial frame memory. Accordingly, the pointer unit can be configured with a relatively small-scale circuit.

The contour integrating unit of the pupil detection device of the present invention preferably includes a plurality of adders for adding the image data extracted by the image data extraction unit along the respective circumferences of the integrating circles. Accordingly the contour integrating unit can be configured using a relatively small-scale circuit.

The pupil radius detection unit of the pupil detection device of the present invention preferably includes a subtracter, a comparator, and a register. The subtracter calculates a difference value between the integrated values of two integrating circles having the closest radius out of the plurality of concentric integrating circles. The comparator compares the difference value outputted from the subtracter and the predetermined threshold. The register holds the radius of the integrating circle in the case in which the difference value is larger than the predetermined threshold as a radius of pupil. Accordingly, the pupil radius detection unit can be configured with a relatively small-scale circuit.

The pupil position detection unit of the pupil detection device of the present invention is preferably includes the register configured in such a manner that when the pupil radius detection unit detects the radius of the integrating circle as the radius of the pupil, the counter output from the pointer unit which points the center coordinates of the integrating circle in question is held as the pupil position coordinates. Accordingly, the pupil position detection unit can be configured with a relatively small-scale circuit.

An iris authentication apparatus of the present invention is characterized by the provision of the pupil detection device of the present invention. In this arrangement, the iris authentication apparatus in which the pupil detection device which can detect the position of the pupil at high speed and with high degree of accuracy can be provided.

Referring to the drawings, the iris authentication apparatus in which the pupil detection device in the present embodiment will be described below.

### (Embodiment)

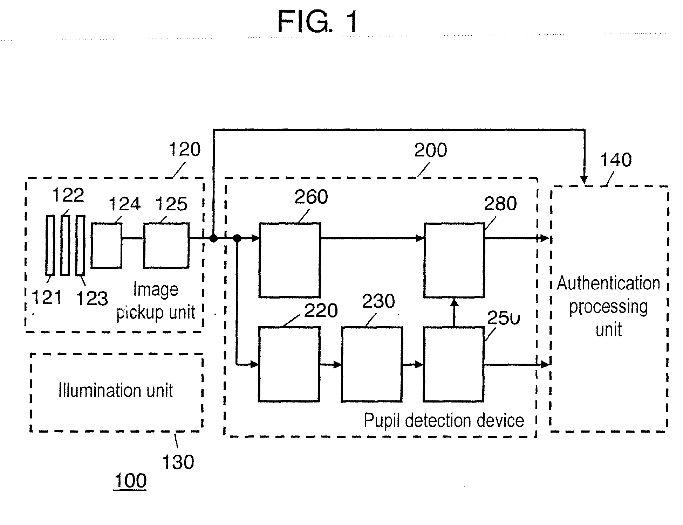

Fig. 1 is a circuit block diagram of iris authentication apparatus 100 in which pupil detection device 200 according to an embodiment of the present invention is employed. In addition to pupil detection device 200, Fig. 1 also illustrates image pickup unit 120, illumination unit 130, authentication processing unit 140 which are necessary to configure iris authentication apparatus 100.

Iris authentication apparatus 100 includes image pickup unit 120, pupil detection device 200, authentication processing unit 140, and illumination unit 130. Image pickup unit 120 picks up an eye image of a user. Pupil detection device 200 detects the position of the pupil and the radius thereof from the eye image. Authentication processing unit 140 performs personal authentication by comparing an iris code obtained from the eye image with a registered iris code. Illumination unit 130 irradiates near-infrared ray of a light amount suitable for obtaining the eye image for illuminating the user's eye and the periphery thereof.

Image pickup unit 120 includes guide mirror 121, visible light eliminating filter 122, lens 123, image pickup element 124 and preprocessing unit 125. In the embodiment of the present invention, by using a fixed focal length lens as lens 123, compact and light weighted optical system and cost reduction are realized. Guide mirror 121 guides the user to place the eye to a correct image pickup position by reflecting an image of his/her own eye thereon.

Then, an image of the user's eye is acquired by image pickup element 124 through visible light eliminating filter 122 and lens 123. Preprocessing unit 125 acquires an image data component from the output signal from image pickup element 124, performs processing such as gain adjustment; which is required as the image data, and outputs as the eye image data of the user.

Pupil detection device 200 includes image data extraction unit 220, contour integrating unit 230, pupil radius detection unit 250, pointer unit 260, and pupil position detection unit 280. Although detailed description will be given later, in this arrangement, the pupil is detected from the eye image data outputted from preprocessing unit 125 and the center coordinates of the pupil and the radius thereof is outputted to authentication processing unit 140.

Authentication processing unit 140 cuts out an iris image from the eye image data based on the center coordinates of the pupil outputted from pupil detection device 200. Then, authentication processing unit converts the iris image into a specific iris code which indicates a pattern of the iris, and compares the same with the registered iris code to perform authentication action.

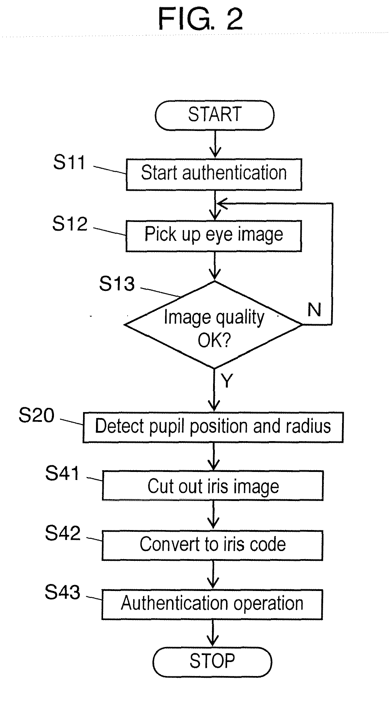

Fig. 2 is a flowchart showing an action of iris authentication apparatus 100 in which pupil detection device 200 according to the embodiment of the present invention is employed. The user starts authentication action by, for example, standing in front of iris authentication apparatus 100 (S11). Then, image pickup unit 120 picks up an eye image of the user (S12). Preprocessing unit 125 determines whether or not the image quality of the eye image such as focus, luminance, contrast, or the like is adequate or not. When it is not adequate, required processing such as illumination control or instruction for the user is carried out, and the eye image is acquired again (S13).

When the obtained eye image is adequate, pupil detection device 200 detects the position of the pupil and the radius thereof. Subsequently, the center coordinates of the pupil and the radius are outputted to authentication processing unit 140 (S20). When the pupil is detected, authentication processing unit 140 cuts out an iris image from the eye image data based on the center coordinates of the pupil (S41). Then, authentication processing unit 140 converts the iris image to a specific iris code which indicates the pattern of the iris (S42), and compares the same with the registered iris code to perform authentication action (S43).

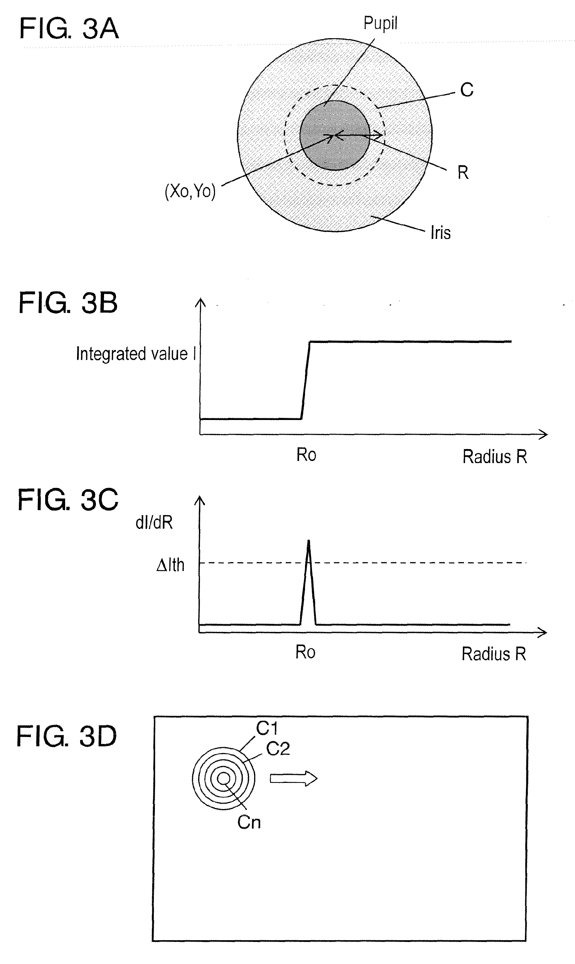

Subsequently, the structure of pupil detection device 200 and the action will be described in detail. Fig. 3A to Fig. 3D are drawings for explaining a method of detecting the pupil performed by pupil detection device 200. Fig. 3A is a drawing showing an example of an image including a pupil. Fig. 3B is a drawing showing an integrated value with respect to the radius of the integrating circle. Fig. 3C is a drawing showing a value obtained by differentiating the integrated value by the radius of the integrating circle. Fig. 3D is a drawing showing integrating circles which move on the eye image.

The image including the pupil includes a low luminance area of a disk shape showing the pupil, and a middle luminance area of an annular shape indicating the iris outside thereof exiting therein as shown in Fig. 3A. Therefore, when the contour integral of the image data is performed along the circumference of integrating circle C having radius R about the positional coordinates (Xo, Yo) at the center of the pupil, integrated value I changes stepwise on the border of pupil radius Ro, as shown in Fig. 3B. Therefore, as shown in Fig. 3C, by obtaining the radius of the integrating circle when value dI/dR obtained by differentiating integrated value I by radius R exceeds a predetermined threshold (hereinafter, referred to as "difference threshold") ΔIth, pupil radius Ro can be known.

Pupil detection device 200 detects the positional coordinates (Xo, Yo) and pupil radius Ro based on the idea described above. As shown in Fig. 3D, n integrating circles C₁-Cₙ having the same center coordinates and different radius are assumed on the eye image, and the image data located on the circumference is integrated with respect to each integrating circle Cᵢ (i=1-n) . Realistically, an average value of the image data of the pixels located on the circumferences of each integrating circle Cᵢ is calculated. Alternatively, a certain number (m) of the pixels are selected from the pixels located on the circumference to add the image data thereof.

In the embodiment of the present invention, number n of the concentric integrating circles was assumed to be 20, and m=8 pixels were selected from the pixels located on each integrating circle Cᵢ to add the image data to obtain integrated value I of the contour integral. When the center of integrating circles C₁-Cₙ is coincides with the center of the pupil, as described above, integrated value Iᵢ with respect to each integrating circle Cᵢ changes stepwise. Therefore, when difference value ΔIᵢ with respect to radius R of integrated value Iᵢ is obtained, the values reach extremely large value ΔI at a point equal to pupil radius Ro.

On the other hand, since integrated value Iᵢ changes gently when the center of integrating circles C₁-Cₙ do not coincide with the center of the pupil, difference value ΔIᵢ is not a large value. Therefore, by obtaining integrating circle Cᵢ which has large difference value ΔIᵢ larger than difference threshold ΔIth, the position of the pupil and the radius thereof can be obtained.

Then, by moving integrating circles C₁-Cₙ to the respective positions on the eye image, the above-described operation is repeated. In this manner, by obtaining the center coordinates (X, Y) of integrating circle Cᵢ when difference value ΔIᵢ is large and radius R at that time, the positional coordinates (Xo, Yo) of the pupil and pupil radius Ro can be obtained.

In the case of the luminance having 256 levels, an average luminance of the pupil is on the order of level equals 40 and an average luminance of the iris is on the order of level equals 100. Therefore, integrated value I when the integrating circle is located on the pupil is about 40 × 8 = 320, and integrated value I when the integrating circle is located on the iris is about 100 × 8 = 800. Therefore, difference threshold ΔIth may be set within the range from 480, which is 1/1 time of the difference, to 120, which is 1/4 times of the same.

However, when difference threshold ΔIth is too small, the probability of erroneous detection of things other than the pupil increases, and when it is too large, the possibility that the pupil cannot be detected increases. Therefore, it is preferable to detect an optimal value experimentally to set difference threshold ΔIth. In the embodiment of the present invention, difference threshold ΔIth is set to 2/3 of the difference between the integrated value of the average brightness of the pupil and the integrated value of the average brightness of the iris.

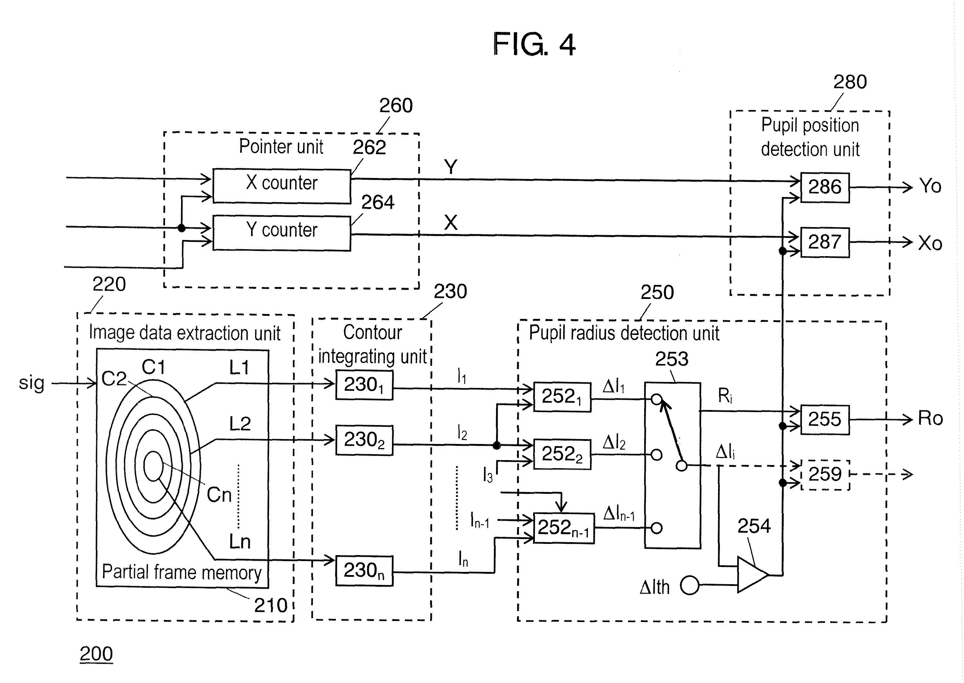

Fig. 4 is a circuit block diagram of pupil detection device 200 in the embodiment of the present invention. Pupil detection device 200 includes image data extraction unit 220, contour integrating unit 230, pupil radius detection unit 250, pointer unit 260, and pupil position detection unit 280. Image data extraction unit 220 sets integrating circles C₁-Cₙ on the eye image to extract the image data on the circumference of each integrating circle Cᵢ. Contour integrating unit 230 performs contour integral on the extracted image data for each integrating circle Cᵢ.

Pupil radius detection unit 250 detects difference value ΔIᵢ of integrated value Iᵢ with respect to radius Rᵢ to compare the same with difference threshold ΔIth. Then by obtaining the radius of the integrated circle in a case in which the difference value is larger than difference threshold ΔIth, the radius of the integrating circle whose integrated value of the concentric integrating circles changes stepwise is detected. Pointer unit 260 shows the center coordinates (X, Y) of integrating circles C₁-Cₙ. Pupil position detection unit 280 holds the center coordinates of the integrating circles in the case in which difference value ΔIᵢ is larger than difference threshold ΔIth.

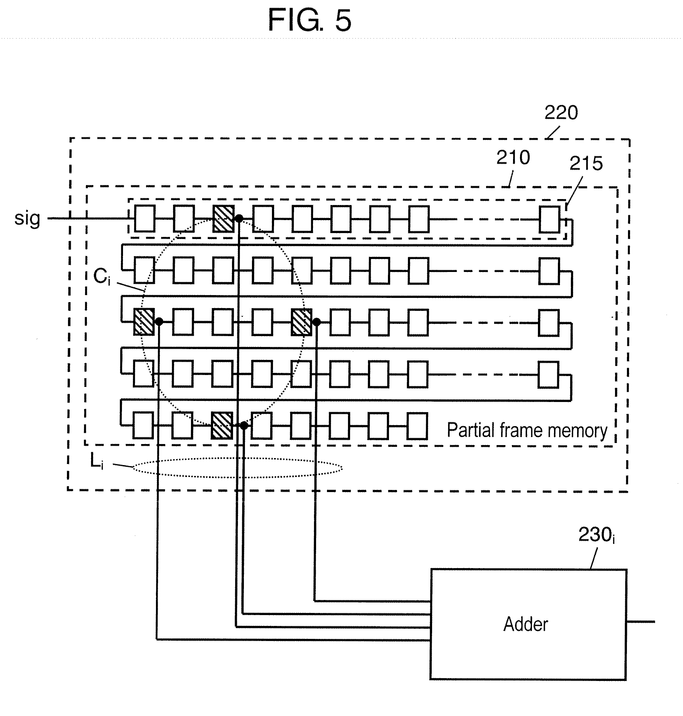

Fig. 5 is a circuit diagram of image data extraction unit 220. Fig. 5 also shows one integrating circle and adder 230i corresponding thereto. Image data extraction unit 220 includes partial frame memory 210, and drawing lines Lᵢ for outputting the image data. Image data extraction unit 220 simultaneously outputs a plurality of image data of integrating circles. Partial frame memory 210 is composed of line memories 215 of first-in first-out (FIFO type) connected in series.

The image data of m pixels on integrating circle Cᵢ are outputted by the drawing line Lᵢ. For clarifying the illustration, Fig. 5 only shows one integrating circle Cᵢ, and four drawing lines Lᵢ for outputting the four image data located on the circumference thereof. However, in the present embodiment of the present invention, eight data drawing lines are outputted from each of twenty integrating circles C₁-C₂₀.

Then, every time when image data sig is entered into partial frame memory 210 by one pixel, the entire image held in partial frame memory 210 is shifted by one pixel. Therefore, the image data outputted from drawing lines Lᵢ is also shifted by one pixel. In other words, when image data sig is entered into partial frame memory 210 by one pixel, integrating circles C₁-Cₙ move toward the right by the amount corresponding to one pixel on the eye image. When image data sig which corresponds to one line is entered, integrating circles C₁-Cₙ move downward by the amount corresponding to one line.

In this manner, during the time when the image data which corresponds to one frame is entered into partial frame memory 210, integrating circles C₁-Cₙ scan the entire eye image on the eye image. Therefore, pointer unit 260 counts a clock synchronous with the period of image data acquisition to partial frame memory 210, whereby the center coordinates (X, Y) of the integrating circles is shown by output of X counter 262 and Y counter 264.

As shown in Fig. 4, contour integrating unit 230 is provided with independent adders 230₁-230ₙ with respect to respective integrating circles C₁-Cₙ. Then, m image data located on the circumference of each integrating circle Cᵢ are added, and the respective added results are outputted to pupil radius detection unit 250 as the integrated value Iᵢ.

Pupil radius detection unit 250 includes n-1 subtracters 252₁-252ₙ₋₁, selector 253, comparator 254, and register 255. Subtracters 252₁-252ₙ₋₁ obtain difference of integrated value Iᵢ of each integrating circle Cᵢ with respect to radius R. In other words, difference value △Iᵢ between integrated values Iᵢ and Iᵢ₋₁ for circles Cᵢ and Cᵢ₋₁ which are one-step different in radius out of integrating circles C₁-Cₙ is obtained.

Then, they are compared with difference threshold ΔIth by the comparator 254 via selector 253 in sequence. When difference value ΔIi is larger than difference threshold ΔIth register 255 holds the radius of the integrating circle in this case. It is also possible to provide register 259 that holds difference value ΔIᵢ at the time when difference value ΔIᵢ is larger than difference threshold ΔIth and register 259 is shown by a broken line in Fig. 4.

Pupil position detection unit 280 is provided with resisters 286, 287, and the values of X counter 262 and Y counter 264 when the pupil is detected by pupil radius detection unit 250 are held in resisters 286, 287.

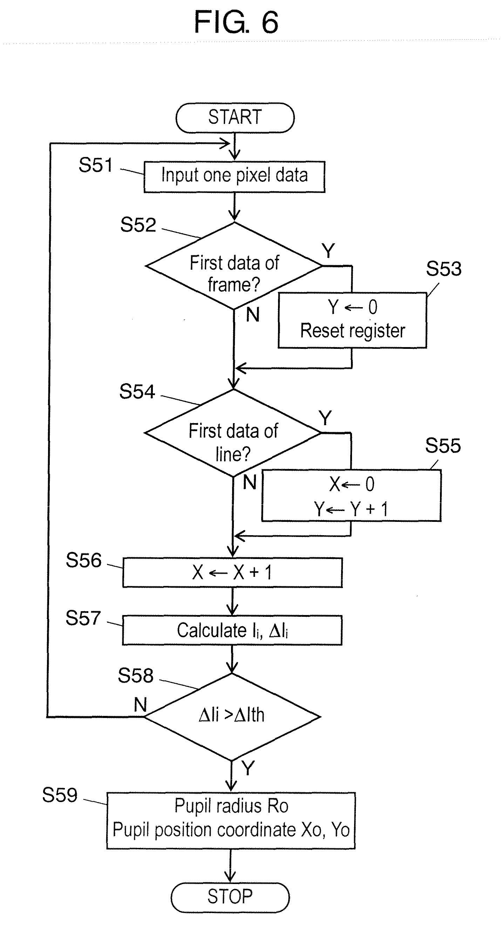

Subsequently, the operation of pupil detection device 200 will be described using a flowchart. In the following description, the eye image data is sequential scanning data, and one frame includes digital data of 480 lines × 640 pixels, for example. Fig. 6 is a flowchart showing the operation the pupil detection device 200 according to the embodiment of the present invention corresponds to one frame of the eye image.

Pupil detection device 200 acquires image data sig which corresponds to one pixel (S51). When the acquired image data is a first data of one frame (S52), Y counter 264 is reset and register 255 of pupil radius detection unit 250 and registers 286, 287 of pupil position detection unit 280 are reset (S53). When acquired data is a first data of one line (S54), X counter 262 is reset and Y counter 264 is incremented (S55). Then, X counter 262 is incremented (S56).

Subsequently, acquired image data is acquired in partial frame memory 210. Then, m image data each time, and n × m image data in total are outputted from each integrating circle Cᵢ out of pixels corresponding n integrating circles C₁-Cₙ on the eye image. Then, adder 230ᵢ corresponding to each integrating circle Cᵢ calculates integrated value Iᵢ of each image data, and pupil radius detection unit 250 calculates difference value ΔIᵢ of each integrated value Iᵢ (S57).

Then, difference value ΔIᵢ and difference threshold ΔIth are compared (S58). When difference value ΔIᵢ is larger than difference threshold ΔIth, it is considered that the pupil is detected, and the radius of the integrating circle at this time is held as pupil radius Ro. Simultaneously, pupil position detection unit 280 holds the center coordinates of the integrating circle as pupil position coordinates (Xo, Yo) (S59). When difference value ΔIᵢ is equal to or smaller than difference threshold ΔIth, the procedure goes back to Step S51 to acquire image data of an amount corresponding to the next one pixel.

A series of operations from Step S51 to Step S59 is executed every time when the image data is entered to partial frame memory 210 by an amount corresponding to one pixel. For example, when the frame frequency is 30 Hz and the eye image is composed of 640 × 480 pixels, the aforementioned series of operations is executed in a period equal to or shorter than 1/(30 × 640 × 480) second. When one pixel is entered into partial frame memory 210, the integrating circle moves on the image by an amount corresponding to one pixel, and hence the integrating circle scan the image once while entering the image of one frame. In this manner, the pupil can be detected on real time basis with respect to the image data picked up by image pickup unit 120 with a relatively small-scale circuit.

In the above-described embodiment, difference value ΔIᵢ and difference threshold ΔIth are compared and it is determined that the pupil is detected at a timing when difference value ΔIᵢ exceeds difference threshold ΔIth. Then, the radius and the center coordinates of the integrating circle of this case are determined to be the radius of the pupil and the center coordinates of the pupil respectively. However, it is also applicable to consider the possibility that difference value ΔIᵢ exceeds difference threshold ΔIth accidentally at a position other than the actual position of the pupil. In the case in which a plurality of difference values ΔIᵢ larger than difference threshold ΔIth exist, a structure in which the radius and the center coordinate of the integrating circle corresponding to the largest difference value are determined to be the radius of the pupil and the center coordinates of the pupil is also applicable. In this arrangement, erroneous operation of the pupil detection device is prevented and the accuracy of detection of the pupil can be improved.

In this embodiment, the number of concentric integrating circles is determined to be twenty and the number of image data to be outputted from one integrating circle is determined to be eight. However, these numbers are preferably determined considering the detection accuracy, processing time, and the scale of the circuit in parallel.

According to the present invention, the pupil detection device and the iris authentication apparatus which can detect the position of the pupil at high-speed and with high degree of accuracy is provided.

### [Industrial Applicability]

As the present invention can provide the pupil detection device which can detect the position of the pupil at high-speed and with high degree of accuracy, it is effective for the iris authentication apparatus or the like which is used for personal authentication.

## Claims

1. A pupil detection device comprising:
an image data extraction unit for determining a plurality of circles on an eye image as integrating circles respectively, and extracting an image data of the eye image positioned on the circumferences of the integrating circles;
a contour integrating unit integrating the image data extracted by the image data extraction unit along the respective circumferences of the integrating circles;
a pupil radius detection unit for detecting that an integrated value obtained by the contour integrating unit has changed stepwise with respect to the radius of the integrating circle;
a pupil position detection unit for detecting that the center coordinates of the integrating circle as pupil position coordinates when the pupil radius detection unit detects the stepwise change,
wherein the plurality of circles are set concentrically, and the image data extraction unit extracts the plurality of image data simultaneously.

2. The pupil detection device of Claim 1, wherein when a difference value between the integrated value of the two integrating circles having the closest radius out of the plurality of concentric integrating circles is larger than a predetermined threshold, the pupil radius detection unit considers that the integrated value has changed stepwise with respect to the radius of the integrating circle.

3. The pupil detection device of Claim 2, wherein the predetermined threshold is set to a range between 1/4 to 1/1 times the difference between the integrated value when the integrating circle is Located on an iris and the integrated value when the integrating circle is located on a pupil.

4. The pupil detection device of Claim 1, wherein the image data extraction unit comprises:
a partial frame memory,
the partial frame memory comprising:
a plurality of line memories of first-in first-out (FIFO) type being connected, and
drawing lines for drawing image data corresponding to pixels on the respective circumferences of the plurality of concentric integrating circles.

5. The pupil detection device of Claim 4 comprising a pointer unit for indicating center coordinates of the integrating circle,
the pointer unit comprising a counter for counting a clock synchronized with a period for acquiring the image data on the partial frame memory.

6. The pupil detection device of Claim 1, wherein the contour integrating unit comprises a plurality of adders for adding the image data extracted by the image data extraction unit along the respective circumferences of the integrating circles.

7. The pupil detection device of Claim 2, wherein the pupil radius detection unit comprises:
a subtracter for calculating a difference value between the integrated values of the two integrating circles having the closest radius out of the plurality of concentric integrating circles:
a comparator for comparing the difference value outputted from the subtracter and the predetermined threshold.; and
a register for holding the radius of the integrating circle in the case in which the difference value is larger than the predetermined threshold as a radius of pupil.

8. The pupil detection device of Claim 5, wherein the pupil position detection unit comprising a register, the register being configured in such a manner that when the pupil radius detection unit detects the radius of the integrating circle as the radius of the pupil, the counter output from the pointer unit which points the center coordinates of the integrating circle in question is held as the pupil position coordinates.

9. An iris authentication apparatus comprising the pupil detection device of any one of Claim 1 to Claim 8.
